# EUROPÄISCHE PATENTSCHRIFT

(11) **EP 2 935 152 B1**
(45) Veröffentlichungstag und Bekanntmachung des Hinweises auf die Patenterteilung: **21.09.2016**
(21) Anmeldenummer: 13831815.9
(22) Anmeldetag: 19.12.2013
(51) Int. Cl.: F27D 1/00, C21D 9/00, C04B 35/48, F27B 1/14, F27B 3/12, F27B 14/10, F27D 1/02, F27B 5/08

(54) **THERMISCHES ABSCHIRMSYSTEM**
THERMAL SHIELDING DEVICE
DISPOSITIF DE PROTECTION THERMIQUE

(30) Priorität: 20.12.2012 AT 4772012
(43) Veröffentlichungstag der Anmeldung: 28.10.2015
(73) Patentinhaber: Plansee SE, 6600 Reutte (AT)
(72) Erfinder: GROHS, Christian, A-6600 Breitenwang (AT); HUBER, Karl, A-6600 Reutte (AT); PLANKENSTEINER, Arno, A-6067 Absam (AT); RAGGL, Karl, A-6604 Höfen (AT); VALENTINI, Bernhard, A-6600 Reutte (AT)
(74) Vertreter: Ciesla, Bettina
(86) Internationale Anmeldenummer: PCT/AT2013/000203
(87) Internationale Veröffentlichungsnummer: WO 2014/094009

(56) Entgegenhaltungen:
- WO-A1-2011/083898
- US-A- 3 456 935

## Beschreibung

Die vorliegende Erfindung betrifft ein thermisches Abschirmsystem zur thermischen Abschirmung eines Chargenraums von Hochtemperaturöfen, das mindestens ein Abschirmelement aufweist.

Thermische Abschirmsysteme werden in Hochtemperaturöfen eingesetzt, um die durch das jeweilige Heizsystem erzeugte und für den jeweiligen Prozess im Chargenraum erforderliche Wärme möglichst in dem Chargenraum zu halten.

Bei einem bisher in Hochtemperaturöfen eingesetzten Konzept wird das thermische Abschirmsystem durch eine Mehrzahl (z.B. 5-15) von im Wesentlichen parallel zueinander angeordneten und über Abstandshalter voneinander beabstandet gehaltenen Strahlblechen aus Wolfram oder Molybdän gebildet. Weiterhin ist bekannt, den Chargenraum in Hochtemperaturöfen durch entsprechend aufgeschichtete, keramische Ziegel (bspw. aus Zirkonoxid) thermisch abzuschirmen.

Aus der WO 2011/083898 A1 ist ein thermisches Abschirmsystem für Hochtemperaturöfen zur Züchtung von Saphir-Einkristallen bekannt, bei welchem mehrere, beabstandet zueinander angeordnete Isolationsblöcke vorgesehen sind. Die Isolationsblöcke selbst sind insbesondere aus Graphit ausgebildet. Weiterhin kann zwischen mindestens zwei Isolationsblöcken eine Isolationsschicht, beispielsweise aus Stahl, vorgesehen sein. Weitere thermische Abschirmsysteme für Hochtemperaturöfen sind aus den Druckschriften RU 100770 U1 sowie aus JP 2002-333279 A bekannt.

Die stetig steigenden Anforderungen bezüglich der Produktivität, der Produktqualität der thermisch in Hochtemperaturöfen behandelten (bzw. hergestellten) Teile und der Energieeffizienz von Hochtemperaturöfen machen eine weitergehende Optimierung von thermischen Abschirmsystemen erforderlich. Insbesondere besteht im Hinblick auf die Produktqualität bei vielen Produkten die Anforderung, dass in dem Chargenraum nur geringe Temperaturgradienten auftreten, was insbesondere durch eine Erhöhung der Abschirmwirkung des thermischen Abschirmsystems erzielbar ist. Durch eine Erhöhung der Abschirmwirkung wird ferner die Energieeffizienz von Hochtemperaturöfen verbessert.

Bei den herkömmlichen Strahlblechsystemen kann die Abschirmwirkung dadurch verbessert werden, dass die Anzahl der Strahlbleche erhöht wird. Dadurch wird die Anzahl der Oberflächen, über die der Wärmestrom stattfindet, erhöht, so dass über die Mehrzahl der Strahlbleche ein vergleichsweise höherer Temperaturabfall erzielbar ist. Typischerweise geht damit eine Reduzierung der Blechstärke einher. Beispielsweise werden Blechstärken im Bereich von 0,25 - 2,0 mm eingesetzt, die voneinander nur einen freien Abstand im Bereich von 4 - 8 mm aufweisen. Diese Optimierung von Strahlblechabschirmungen stößt jedoch an Grenzen, da hieraus ein filigraner und vielteiliger Aufbau resultiert und erhebliche Alterungserscheinungen auftreten. Ein Austausch der Strahlbleche ist mit Aufwand und Kosten verbunden.

Bei den herkömmlich eingesetzten, keramischen Ziegeln wird die niedrige Wärmeleitfähigkeit des keramischen Materials (insbesondere Zirkonoxid oder Aluminiumoxid) ausgenutzt. Auch hier besteht aber ein Optimierungsbedarf.

Dementsprechend besteht die Aufgabe der vorliegenden Erfindung darin, thermische Abschirmsysteme für Hochtemperaturöfen im Hinblick auf deren Abschirmwirkung sowie Energieeffizienz weiter zu verbessern, wobei gleichzeitig eine hohe Lebensdauer derselben gewährleistet sein soll. Das thermische Abschirmsystem soll dabei insbesondere für Zieltemperaturen von ≥ 1.500 °C, insbesondere von ≥1.700 °C ausgelegt sein.

Die Aufgabe wird gelöst durch ein thermisches Abschirmsystem gemäß Anspruch 1. Vorteilhafte Weiterbildungen der Erfindung sind in den abhängigen Ansprüchen angegeben.

Gemäß der vorliegenden Erfindung wird ein thermisches Abschirmsystem zur thermischen Abschirmung eines Chargenraums von Hochtemperaturöfen bereitgestellt, das mindestens ein Abschirmelement aufweist. Das Abschirmelement weist eine Einfassung aus Refraktärmetallblech(en) und einen in partikulärer und/oder faseriger Struktur vorliegenden, keramischen Werkstoff auf der Basis von Zirkonoxid (ZrO₂), der in der Einfassung aufgenommen ist, auf. Vorzugsweise liegt der keramische Werkstoff insgesamt entweder in partikulärer oder alternativ in faseriger Struktur vor, d.h. es ist vorzugsweise keine Mischung aus Partikeln und Fasern gegeben.

Indem gemäß der vorliegenden Erfindung ein keramischer Werkstoff, der in partikulärer und/oder faseriger Struktur vorliegt, eingesetzt wird, wird im Vergleich zum Bulk-Werkstoff eine weitergehende Reduzierung der Wärmeleitfähigkeit, was im Hinblick auf die Abschirmwirkung vorteilhaft ist, erzielt. Ferner wird im Vergleich zum Bulk-Werkstoff eine Reduzierung der Wärmekapazität, was im Hinblick auf die Energieeffizienz bei Aufheizphasen sowie Abkühlphasen und im Hinblick auf die Produktivität vorteilhaft ist, erzielt. Durch die partikuläre und/oder faserige Struktur wird eine Wärmeleitung zwischen den einzelnen Partikeln bzw. Fasern nur über die vergleichsweise kleinen Kontaktstellen zwischen den einzelnen Partikeln bzw. Fasern ermöglicht. Ferner treten Strahlungseffekte zwischen den einzelnen Partikeln und Fasern auf. Insbesondere können bei einem Werkstoff basierend auf Zirkonoxid (ZrO₂) sehr niedrige Wärmeleitfähigkeiten im Bereich von wenigen zehntel W/(mK) (Watt pro Meter und Kelvin), wie beispielsweise im Bereich von 1/10 W/(mK) bis zu 1 W/(mK), erzielt werden (diese Angaben gelten für den gesamten, relevanten Temperaturbereich). Indem der keramische Werkstoff, der in partikulärer und/oder faseriger Struktur vorliegt, in der Einfassung aus Refraktärmetallblech(en) aufgenommen ist, wird ein modularer Aufbau erhalten, was im Hinblick auf die Handhabung, im Hinblick auf Reparaturarbeiten sowie im Hinblick auf einen Austausch des keramischen Werkstoffes und/oder des gesamten Abschirmelements vorteilhaft ist. Insbesondere kann der keramische Werkstoff bei Auftreten von Alterungserscheinungen an demselben (z.B. mit der Zeit zunehmende Zersetzung) aus der Einfassung herausgenommen und ersetzt werden, während die Einfassung mehrmals verwendbar ist. Das/die Refraktärmetallblech(e) der Einfassung kann/können bei der vorliegenden Erfindung deutlich dicker und stabiler im Vergleich zu herkömmlich eingesetzten Strahlblechen ausgebildet werden, was im Hinblick auf die Stabilität und Lebensdauer des Abschirmelements vorteilhaft ist. Die Dicke des/der Refraktärmetallblech(e) der Einfassung wird insbesondere in Abhängigkeit von der Größe des Abschirmelements gewählt, wobei die Dicke mit zunehmender Größe vorzugsweise zunimmt. Zusätzlich treten auch an dem/den Refraktärmetallblech(en) der Einfassung Strahlungseffekte auf, was vorteilhaft für die thermische Abschirmwirkung ist. Dementsprechend werden durch die Kombination des in partikulärer und/oder faseriger Struktur vorliegenden, keramischen Werkstoffs mit der Einfassung aus Refraktärmetallblech(en) eine sehr gute Abschirmwirkung, eine hohe Energieeffizienz, eine hohe Lebensdauer, eine einfache Wartung, ein einfacher Austausch des keramischen Werkstoffs sowie ein einfacher Austausch des gesamten Abschirmelements erzielt. Gerade bei Anwendungen mit hohen Zieltemperaturen, insbesondere bei Zieltemperaturen von ≥ 1.500 °C, bevorzugt bei Zieltemperaturen von ≥ 1.700 °C, bis zu Zieltemperaturen im Bereich von 2.500 °C, ist das erfindungsgemäße thermische Abschirmsystem den oberhalb geschilderten, herkömmlichen Abschirmsystemen bestehend aus Strahlblechen oder keramischen Ziegeln überlegen.

Als "Hochtemperaturöfen" werden in dem vorliegenden Zusammenhang Ofen und Reaktoren bezeichnet, die für eine Zieltemperatur von ≥ 1.500 °C, insbesondere von ≥ 1.700 °C, bis zu Zieltemperaturen im Bereich von 2.500 °C ausgelegt sind. Solche Hochtemperaturöfen werden beispielsweise zum Sintern von Refraktärmetallen, insbesondere von Molybdän- oder Wolfram-Basiswerkstoffen, zur Züchtung von Saphir-Einkristallen für die LED-Herstellung, etc., eingesetzt. Als "Zieltemperatur" wird dabei die innerhalb des Chargenraums maximal erreichte Temperatur bei Durchlaufen eines Temperaturprofils (z.B. Aufheizphase, ggf. mit mehreren Rampen; Haltephase bei der Zieltemperatur; Abkühlphase) bezeichnet. Besonders geeignet ist das erfindungsgemäße thermische Abschirmsystem in Hochtemperaturöfen, bei denen aufgrund der ablaufenden thermischen Prozesse innerhalb des Chargenraums auf den Einsatz von kohlenstoffhaltigen Verbindungen, insbesondere auf Graphit, verzichtet werden muss. Weiterhin ist das erfindungsgemäße, thermische Abschirmsystem bei solchen Hochtemperaturöfen besonders gut geeignet, die nicht-induktiv, sondern beispielsweise über elektrische (Widerstands-)Heizelemente, beheizt werden.

Als "Einfassung" wird ein vorzugsweise geschlossener oder alternativ ggf. auch teilweise offener Behälter oder eine Kanne bezeichnet, die den keramischen Werkstoff in der äußeren Grundform, in der das thermische Abschirmelement vorliegen soll, hält und begrenzt. Dabei weist die Grundform eine derart hohe Dicke, die durch die beabstandet zueinander angeordneten Refraktärmetallbleche bestimmt wird, auf, dass dazwischen ein Hohlraum zur Aufnahme des keramischen Werkstoffes ausgebildet ist. Für eine deckenseitige und/oder bodenseitige thermische Abschirmung (bezogen auf die Einsatzstellung des Hochtemperaturofens) kann die Einfassung insbesondere jeweils eine scheibenförmige Grundform (als Deckel- oder als Bodenteil), innerhalb welcher ein Hohlraum zur Aufnahme des keramischen Werkstoffes ausgebildet ist, aufweisen. Für eine seitliche thermische Abschirmung (bezogen auf die Einsatzstellung des Hochtemperaturofens) kann die Einfassung beispielsweise eine hohlzylindrische Grundform, eine Grundform eines Hohlzylindersegments oder allgemeiner eine um den jeweiligen Chargenraum vollständig oder nur teilweise umlaufende Grundform mit einer vorbestimmten Erstreckungshöhe aufweisen. Dabei kann eine seitliche thermische Abschirmung des Chargenraums auch mehrere, als Einzelsegmente ausgebildete Abschirmelemente, die im Einsatz dann umlaufend um den Chargenraum angeordnet werden, aufweisen. Die Einfassung kann gasdicht ausgebildet sein, wodurch vermieden wird, dass Feuchtigkeit eintritt und/oder dass sich Ablagerungen innerhalb der Einfassung bilden. Dies ist aber nicht zwingend. Vielmehr ist bevorzugt, dass die Einfassung auch eine Gaszirkulation ermöglicht. Insbesondere kann die Einfassung auch eine oder mehrere Öffnungen aufweisen, die an solchen Positionen angeordnet sind, an denen ein Austreten des keramischen Werkstoffes bei der jeweiligen Einsatzstellung des Abschirmelements nicht möglich ist. Welche Variante bevorzugt ist, ist insbesondere anhand der Prozesse, die innerhalb des Hochtemperaturofens ablaufen, abzuwägen.

Als "Refraktärmetall" wird in dem vorliegenden Zusammenhang ein metallischer Werkstoff (elementar oder als Legierung vorliegend, ggf. auch mit nichtmetallischen Additiven, wie beispielsweise Oxiden, Karbiden, etc.), der eine Schmelztemperatur von ≥ 2.000 °C aufweist, bezeichnet. Der keramische Werkstoff kann in partikulärer bzw. granularer Form, insbesondere in Form einer Schüttung von Einzelpartikeln bzw. Körnern, vorliegen. Die Einzelpartikel wiederum können zusätzlich auch porös ausgebildet sein. Alternativ kann der keramische Werkstoff auch in faseriger Form, insbesondere als Fasermatte, vorliegen. Ein "Werkstoff auf der Basis von Zirkonoxid (ZrO₂)" ist ein Werkstoff, der zu mindestens 50 Gew.%, vorzugsweise zu mindestens 80 Gew.%, noch bevorzugter zu mindestens 90 Gew.%, aus Zirkonoxid (exakt bezeichnet Zirconiumdioxid, d.h. ZrO₂) besteht, wobei auch möglich ist, dass das Zirkonoxid (ZrO₂) noch weitere Verbindungsbestandteile (wie bspw. Si) aufweist, dass das Zirconium teilweise in einer anderen Oxidationsstufe (als +IV) vorliegt, dass das Zirconium in einer geringfügig von exakt +IV abweichenden Oxidationsstufe vorliegt und/oder dass der keramische Werkstoff weitere Zusätze aufweist. Insbesondere können dem Zirkonoxid (ZrO₂) Additive zur Hochtemperatur-Stabilisierung, wie beispielsweise Yttriumoxid, Calciumoxid, Kalium, etc., zugesetzt sein (Anteile bis zu 20 Gew.%, insbesondere bis zu 10 Gew.%). Die verbleibenden Anteile des keramischen Werkstoffes, die nicht aus Zirkonoxid (ZrO₂) bestehen, bilden insbesondere mit dem Zirkonoxid einen Mischkristall. Zusätzlich oder alternativ können sie aber auch als separate Phase(n) und/oder als separate Partikel bzw. Fasern vorliegen. Zirkonoxid ist im Hinblick auf seine geringe Wärmeleitfähigkeit und seine Hochtemperaturstabilität (die unter anderem durch die oberhalb genannten Additive noch weiter verbessert werden kann) besonders bevorzugt. Grundsätzlich können innerhalb der Einfassung zusätzlich zu dem keramischen Werkstoff auch noch weitere Komponenten aufgenommen sein. Insbesondere können innerhalb der Einfassung Stützelemente, metallische Bleche, etc., vorgesehen sein. Bevorzugt ist innerhalb der Einfassung ausschließlich der keramische, in einer partikulären und/oder faserigen Struktur vorliegende Werkstoff auf der Basis von Zirkonoxid aufgenommen.

Gemäß einer Weiterbildung liegt der keramische Werkstoff als Schüttung von Einzelpartikeln vor. Eine Schüttung ist bevorzugt, da das Material wiederverwendet werden kann und gegebenenfalls Material in die Einfassung nachgefüllt werden kann. Ferner ermöglicht eine Schüttung, dass der keramische Werkstoff einfach ausgetauscht werden kann, da er lediglich aus der Einfassung (die ggf. erst an einer geeigneten Position zu öffnen ist) ausgeschüttet werden muss und die Einfassung anschließend mit einem neuen, keramischen Werkstoff in Form einer Schüttung befüllt werden kann. Im Hinblick auf die Erzielung einer langzeitstabilen niedrigen Packungsdichte ist besonders bevorzugt, wenn die Schüttung von Einzelpartikeln eine monomodale Kornverteilung aufweist. Unter einer monomodalen Kornverteilung wird verstanden, dass sämtliche Einzelpartikel eine im Wesentlichen gleiche Korngröße (innerhalb eines akzeptablen Toleranzbereichs) aufweisen. Die mittlere Korngröße k der Schüttung liegt insbesondere in einem Bereich von 0,1 mm ≤ k ≤ 4 mm. Vorzugsweise weist die Schüttung eine sphärische oder im Wesentlichen sphärische Kornform auf.

Gemäß einer Weiterbildung besteht der keramische Werkstoff zu einem Anteil von ≥ 80 Gew.% aus Zirkonoxid (ZrO₂). Insbesondere besteht der keramische Werkstoff zu einem Anteil von ≥ 90 Gew.% aus Zirkonoxid (ZrO₂). Wie oberhalb erläutert wird, ist solch ein hoher Anteil im Hinblick auf die niedrige Wärmeleitfähigkeit sowie die Hochtemperaturstabilität vorteilhaft.

Grundsätzlich sind für das/die Refraktärmetallblech(e) metallische Werkstoffe basierend auf Mo (Molybdän) oder W (Wolfram) besonders bevorzugt (d.h. zu mindestens 50 Gew. % aus Mo oder zu mindestens 50 Gew. % aus W). Ist das Abschirmelement besonders hohen Temperaturen ausgesetzt, wie es beispielsweise bei einer Anordnung direkt angrenzend an den Chargenraum eines Hochtemperaturofens der Fall ist, so ist ein Werkstoff basierend auf W (d.h. zu mindestens 50 Gew.% aus W) aufgrund der vergleichsweise hohen Schmelztemperatur zumindest an der Seite, die dem Chargenraum zugewandt ist, besonders bevorzugt. Gemäß einer Weiterbildung ist/sind das/die Refraktärmetallblech(e) zu ≥ 98 Gew.% aus W gebildet, wodurch dieses/diese besonders hohen Einsatztemperaturen standhält/standhalten. Ist/sind dagegen zwischen dem Chargenraum und dem Abschirmelement eines oder mehrere Strahlbleche angeordnet, so kann für das/die Refraktärmetallblech(e) des Abschirmelements auch ein Werkstoff basierend auf Mo (d.h. zu mindestens 50 Gew.% aus Mo) eingesetzt werden. Ein Werkstoff basierend auf Mo hat den Vorteil, dass er im Vergleich zu einem Werkstoff basierend auf W leichter im Rahmen der Herstellung der Einfassung umgeformt und bearbeitet werden kann.

Gemäß einer Weiterbildung weist/weisen das/die Refraktärmetallblech(e) eine Wandstärke d_{B} in einem Bereich von 0,25 mm ≤ d_{B} ≤ 2,5 mm, insbesondere in einem Bereich von 0,3 mm ≤ d_{B} ≤ 1,2 mm, auf. Bei diesen Bereichen wird eine ausreichende mechanische Stabilität bei noch akzeptablen Materialkosten erzielt. Die Wandstärke wird vorzugsweise in Abhängigkeit von der Größe des Abschirmelements gewählt. Vorzugsweise nimmt die Wandstärke mit zunehmender Größe des Abschirmelements zu.

Gemäß einer Weiterbildung weist das Abschirmelement eine Dicke d_{E} im Bereich von 8 mm ≤ d_{E} ≤ 120 mm, insbesondere im Bereich von 10 mm ≤ d_{E} ≤ 60 mm, auf. Diese Bereiche sind im Hinblick auf eine möglichst effektive Abschirmwirkung einerseits und im Hinblick auf eine möglichst dünnwandige Ausbildung des Abschirmelements andererseits besonders bevorzugt. Die "Dicke" wird dabei senkrecht zu der Haupterstreckungsfläche des Abschirmelements in dem jeweiligen Betrachtungspunkt gemessen, wobei die Haupterstreckungsfläche einen ebenen oder einen gekrümmten Verlauf aufweisen kann. Die "Dicke" verläuft in der Regel im Wesentlichen parallel zu der für das betreffende Abschirmelement vorgesehenen Abschirmrichtung.

Gemäß einer Weiterbildung weist das thermische Abschirmsystem neben dem Abschirmelement mehrere, zueinander beabstandete Strahlbleche aus Refraktärmetall auf. Gegebenenfalls kann auch nur ein Strahlblech vorgesehen sein. Dadurch kann in vorteilhafter Weise die durch Strahlbleche (oder gegebenenfalls durch nur ein Strahlblech) bereitgestellte Abschirmwirkung mit der durch das erfindungsgemäße Abschirmelement bereitgestellten Abschirmwirkung kombiniert werden. Insbesondere ist diese Kombination vorteilhaft, da das erfindungsgemäße Abschirmelement aufgrund der Füllung mit dem in partikulärer und/oder faseriger Struktur vorliegenden, keramischen Werkstoff eine vergleichsweise hohe Abschirmwirkung, die insbesondere bei Temperaturen von ≥ 1.500 °C derjenigen von Strahlblechen überlegen und bei Temperaturen von ≥ 1.700 °C derjenigen von Strahlblechen deutlich überlegen ist, bereitstellt. Dementsprechend wird über die Dicke des Abschirmelements hinweg gerade dann, wenn dieses an Bereiche mit solch hohen Temperaturen angrenzt, ein deutlicher Temperaturabfall erzielt. Würde das thermische Abschirmsystem ausschließlich durch (ein) entsprechend dick ausgebildete(s) Abschirmelement(e) gebildet werden, so würde dieses jedoch eine vergleichsweise hohe Wärmekapazität aufweisen, was insbesondere im thermisch transienten Regime (z.B. Aufheiz- und Abkühlphase) im Hinblick auf die Energieeffizienz und thermische Trägheit von Nachteil ist. Denn eine höhere Wärmekapazität des Abschirmsystems kann eine Verzögerung bei der Einstellung einer gewünschten Zieltemperatur und/oder einen erhöhten Energieverbrauch bei innerhalb kurzer Zeit einzustellenden Temperaturanstiegen bedingen. Dementsprechend ist gerade eine Abfolge aus Abschirmelement und Strahlblechen besonders vorteilhaft. Die Strahlbleche weisen vorzugsweise jeweils eine Haupterstreckungsfläche auf, die im Wesentlichen parallel zu der Haupterstreckungsfläche zumindest eines Abschnittes des jeweiligen Abschirmelements verläuft. Insbesondere sind die Strahlbleche entlang der Abschirmrichtung benachbart zu dem Abschirmelement angeordnet, wobei grundsätzlich eine innenseitige (d.h. zu dem Chargenraum zugewandte) und/oder eine außenseitige (d.h. von dem Chargenraum abgewandte) Vorsehung von Strahlblechen relativ zu dem Abschirmelement möglich ist/sind. Als "Strahlbleche" wird eine Mehrzahl (mindestens zwei) von Blechen, die im Einsatz beabstandet zueinander angeordnet sind, bezeichnet. Zur Erzielung einer thermischen Abschirmwirkung wird dabei insbesondere der Effekt ausgenützt, dass die Strahlbleche Wärme jeweils beidseitig zu beiden Seitenflächen abstrahlen und so die Temperatur über eine Folge von Strahlblechen abfällt. Dementsprechend sind die Haupterstreckungsflächen der einzelnen Strahlbleche im Wesentlichen parallel zueinander sowie im Wesentlichen parallel zu der Haupterstreckungsfläche des Abschirmelements ausgerichtet, wobei geringfügige Abweichungen von einer exakt parallelen Ausrichtung für die Erzielung einer ausreichenden thermischen Abschirmwirkung akzeptabel sind.

Grundsätzlich ist entlang der Abschirmrichtung mehr als nur ein Wechsel zwischen Strahlblech(en) und Abschirmelement möglich. Beispielsweise können entlang der Abschirmrichtung zunächst eines oder mehrere Strahlblech(e), dann ein Abschirmelement und anschließend wiederum mindestens eines oder mehrere Strahlblech(e) vorgesehen sein.

Gemäß einer Weiterbildung ist/sind das/die Strahlblech(e) aus Molybdän (reines Molybdän, das Verunreinigungen und/oder Additive bis zu maximal 2 Gew.% aufweist), aus einer Molybdän-basierten Legierung (d.h. eine Legierung mit einem Mo-Anteil von ≥ 50 Gew.%), aus Wolfram (reines Wolfram, das Verunreinigungen und/oder Additive bis zu maximal 2 Gew.% aufweist) oder aus einer Wolfram-basierten Legierung (d.h. eine Legierung mit einem W-Anteil von ≥ 50 Gew.%). Diese Materialien haben sich im Einsatz besonders bewährt, wobei Strahlbleche aus Molybdän oder alternativ aus Wolfram besonders bevorzugt sind. Die Auswahl zwischen Wolfram (bzw. einer Wolfram-basierten Legierung) einerseits und Molybdän (bzw. einer Molybdän-basierten Legierung) andererseits wird insbesondere dadurch beeinflusst, welchen Temperaturen das jeweilige Strahlblech im Einsatz ausgesetzt ist. Dementsprechend ist bevorzugt, dass Strahlbleche, die im Einsatz hohen Temperaturen ausgesetzt sind, beispielsweise weil sie im Einsatz direkt oder nur über eine vergleichsweise geringe thermische Abschirmung an den Chargenraum angrenzen, aus Wolfram (oder alternativ aus einer Wolfram-basierten Legierung) gebildet sind. Ferner ist im Hinblick auf die Kosten und im Hinblick auf die Verarbeitbarkeit der Strahlbleche bevorzugt, dass jene, die nur vergleichsweise niedrigeren Temperaturen ausgesetzt sind, beispielsweise weil sie im Einsatz durch eine weitergehende thermische Abschirmung von dem Chargenraum thermisch abgeschirmt sind, aus Molybdän (oder alternativ aus einer Molybdän-basierten Legierung) gebildet sind.

Die vorliegende Erfindung betrifft ferner einen Hochtemperaturofen, der einen Chargenraum zur thermischen Behandlung von Teilen sowie ein erfindungsgemäßes thermisches Abschirmsystem, welches den Chargenraum zumindest teilweise umgibt und das ggf. auch gemäß einer oder mehrerer der oberhalb erläuterten Weiterbildungen und/oder Varianten ausgebildet sein kann, aufweist.

Gemäß einer Weiterbildung weist das thermische Abschirmsystem mehrere, in einer Abschirmrichtung (von dem Zentrum des Chargenraums nach außen verlaufend) zueinander beabstandete Strahlbleche aus Refraktärmetall, die in Abschirmrichtung benachbart zu dem Abschirmelement angeordnet sind, auf.

Grundsätzlich ist/sind eine innenseitige (d.h. zu dem Chargenraum zugewandte) und/oder eine außenseitige (d.h. von dem Chargenraum abgewandte) Vorsehung von Strahlblechen relativ zu dem Abschirmelement möglich. Bevorzugt ist, dass die Strahlbleche auf der von dem Chargenraum abgewandten Seite des Abschirmelements angeordnet sind. Hierdurch kann - wie unterhalb im Detail erläutert wird - gerade bei hohen Temperaturen innerhalb des Chargenraums, wie beispielsweise bei Temperaturen von ≥ 1.500 °C, insbesondere bei Temperaturen von ≥ 1.700 °C, eine Abschirmwirkung erzielt werden, die derjenigen von herkömmlichen Strahlblechen deutlich überlegen ist. Die Strahlbleche weisen insbesondere eine Wandstärke im Bereich von 0,25 - 2,0 mm auf. Insbesondere liegt der freie Zwischenraum zwischen zwei zueinander benachbarten Strahlblechen in einem Bereich von 4 - 8 mm. Vorzugsweise liegt auch der freie Zwischenraum zwischen dem Refraktärmetallblech des Abschirmelements und dem daran angrenzenden Strahlblech in diesem Bereich.

Gemäß einer Weiterbildung liegt die Anzahl a der in Abschirmrichtung benachbart zu dem Abschirmelement angeordneten Strahlbleche im Bereich von 1 ≤ a ≤ 7, insbesondere im Bereich von 2 ≤ a ≤ 5. Innerhalb dieses Bereichs kann eine ausreichende Abschirmwirkung erzielt werden, ohne dass das Abschirmsystem übermäßig dick ausgebildet werden muss. Gemäß einer Weiterbildung weist der Hochtemperaturofen mindestens ein elektrisches Heizelement, insbesondere ein elektrisches Widerstands-Heizelement, zur Beheizung des Chargenraums auf. Das elektrische Heizelement ist insbesondere innerhalb des thermischen Abschirmsystems (d.h. auf der dem Chargenraum zugewandten Seite des thermischen Abschirmsystems) angeordnet. Das erfindungsgemäße thermische Abschirmsystem ist gerade bei elektrisch beheizbaren Hochtemperaturöfen geeignet.

Gemäß einer Weiterbildung ist mindestens ein Abschirmelement als seitliche Abschirmung, die den Chargenraum zumindest teilweise umgibt, ausgebildet. Insbesondere kann das betreffende Abschirmelement eine hohlzylindrische Grundform, eine Grundform eines Hohlzylindersegments oder allgemeiner eine vollständig oder teilweise um den Chargenraum umlaufende Grundform, die eine vorbestimmte Höhe aufweist, aufweisen. Auf diese Weise kann eine raumsparende und effektive Abschirmung in seitlicher Richtung bereitgestellt werden. Die Angaben "seitlich" und "Höhe" oberhalb beziehen sich dabei auf einen Hochtemperaturofen, dessen Hauptachse im Einsatz im Wesentlichen vertikal ausgerichtet ist. Dabei ist zu berücksichtigen, dass es neben Hochtemperaturöfen, die im Einsatz "stehend", d.h. mit im Wesentlichen vertikal ausgerichteter Hauptachse, angeordnet sind, auch Hochtemperaturöfen gibt, die im Einsatz "liegend", d.h. mit im Wesentlichen horizontal ausgerichteter Hauptachse, angeordnet sind. Auch in dem letzteren Fall der liegenden Anordnung kann die Abschirmung weitgehend entsprechend relativ zu der jeweiligen Hauptachse ausgebildet sein. Insbesondere wird in letzterem Fall mit "seitlich" auf eine radial zu der Hauptachse versetzte Position Bezug genommen und an Stelle der Höhenrichtung ist eine parallel oder im Wesentlichen parallel zu der Hauptachse verlaufende Richtung maßgeblich.

Gemäß einer Weiterbildung ist mindestens ein Abschirmelement als modular aus dem Hochtemperaturofen herausnehmbares Bauteil ausgebildet. Durch einen derartigen modularen Aufbau ist das Abschirmelement einfach aus dem Hochtemperaturofen ausbaubar, wodurch ein Austausch des gesamten Abschirmelements, ein Austausch des keramischen Werkstoffes innerhalb des Abschirmelements und/oder ein Auffüllen des keramischen Werkstoffes innerhalb des Abschirmelements einfach durchführbar ist/sind.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Querschnittsansicht eines erfindungsgemäßen Abschirmelements gemäß einer ersten Ausführungsform;
- Fig. 2:: eine schematische Querschnittsansicht eines erfindungsgemäßen Abschirmelements gemäß einer zweiten Ausführungsform;
- Fig. 3:: ein schematischer Ausschnitt aus einem Hochtemperaturofen zur Darstellung einer dritten Ausführungsform eines erfindungsgemäßen Abschirmsystems;
- Fig. 4:: ein schematischer Ausschnitt aus einem Hochtemperaturofen zur Darstellung einer vierten Ausführungsform eines erfindungsgemäßen Abschirmsystems; und
- Fig. 5:: ein schematischer Ausschnitt aus einem Hochtemperaturofen zur Darstellung einer fünften Ausführungsform eines erfindungsgemäßen Abschirmsystems.

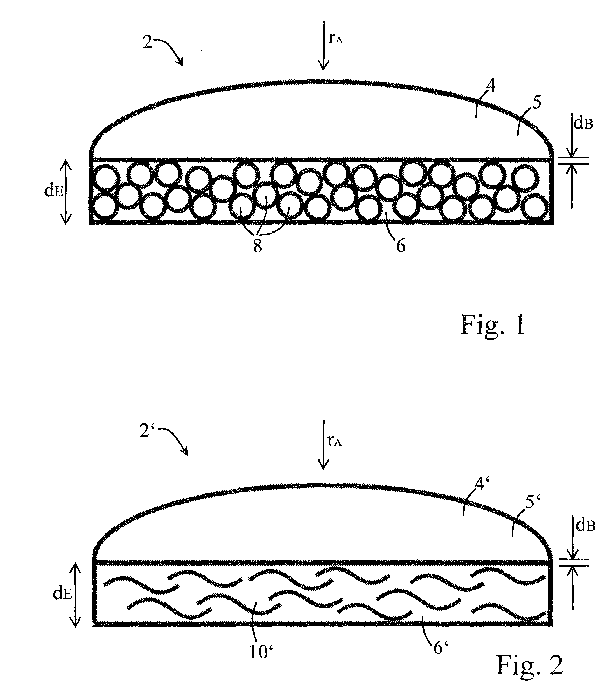

In Fig. 1 ist ein Abschirmelement 2 gemäß einer ersten Ausführungsform der vorliegenden Erfindung dargestellt. Das Abschirmelement 2 weist eine scheibenförmige Grundform auf. Die Grundform wird durch eine geschlossene Einfassung 4 aus Wolframblech(en) 5 gebildet (wobei die Einfassung 4 vorliegend nicht gasdicht ausgebildet ist). Innerhalb der Einfassung 4 ist ein scheibenförmiger Hohlraum 6 ausgebildet, der mit einer keramischen Schüttung 8 aus hochtemperaturstabilisiertem Zirkonoxid (ZrO₂) aufgefüllt ist, wobei das Größenverhältnis der Partikel relativ zu der Einfassung nicht korrekt wiedergegeben ist. Die keramische Schüttung 8 weist eine monomodale Korngrößenverteilung auf. Der mittlere Korndurchmesser der Schüttung beträgt 2 mm. Das Wolframblech weist eine Wandstärke d_{B} von 1 mm auf. Das Abschirmelement 2 weist eine Dicke d_{E} von 50 mm auf. Die Abschirmrichtung r_{A}, für die das dargestellte Abschirmelement 2 ausgelegt ist, verläuft parallel zu der dargestellten Messrichtung für die Dicke d_{E}.

Die scheibenförmige Grundform ist insbesondere für die Realisierung einer bodenseitigen und/oder deckenseitigen Abschirmung ausgelegt. Dabei kann das Abschirmelement 2 alleine oder alternativ in Kombination mit weiteren Abschirmkomponenten, wie beispielsweise mit Strahlblechen, eingesetzt werden. Die scheibenförmige Grundform kann auch noch weitere Strukturen und/oder Öffnungen zur Anpassung an Komponenten eines Hochtemperaturofens, wie beispielsweise an Heizelemente, an Anschlusskontakte für die Heizelemente, an weitere Komponenten des Abschirmsystems, etc., aufweisen. Beispielsweise kann das Abschirmelement 2 eine umlaufende Stufe oder Nut zur Aufnahme mindestens eines weiteren, seitlichen Abschirmelements aufweisen.

Bei der nachfolgenden Erläuterung der weiteren Ausführungsformen wird vorwiegend auf die Unterschiede gegenüber der ersten Ausführungsform eingegangen. Soweit gleiche oder einander entsprechende Bauteile bezeichnet werden, werden zum Teil die gleichen Bezugszeichen verwendet.

Bei der in Fig. 2 dargestellten Ausführungsform weist das Abschirmelement 2' wiederum eine geschlossene Einfassung 4' aus Wolframblech(en) 5' auf (wobei die Einfassung 4' vorliegend nicht gasdicht ausgebildet ist). Im Gegensatz zu der ersten Ausführungsform liegt der in dem Hohlraum 6' der Einfassung 4' aufgenommene Werkstoff aus hochtemperaturstabilisiertem Zirkonoxid (ZrO₂) in einer faserigen Struktur vor. Insbesondere ist der Werkstoff in Form einer Fasermatte 10' in der Einfassung 4' aufgenommen.

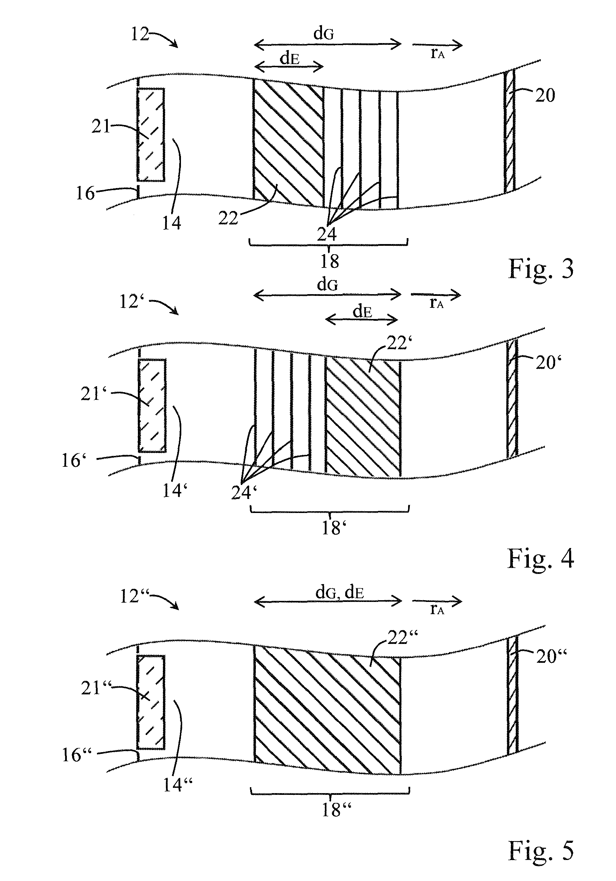

Nachfolgend werden unter Bezugnahme auf die Figuren 3 bis 5 drei Ausführungsformen eines erfindungsgemäßen, thermischen Abschirmsystems, das vorliegend eine seitliche Abschirmung bildet, erläutert. In Fig. 3 ist ein Ausschnitt eines Hochtemperaturofens 12 dargestellt. Der Ausschnitt verläuft entlang der radialen Richtung sowie entlang der axialen Richtung einer Haupt- bzw. Symmetrieachse 16, wobei die Darstellung einer Einsatzstellung des Hochtemperaturofens 12 mit vertikal bzw. in Höhenrichtung ausgerichteter Symmetrieachse 16 entspricht. Der dargestellte Ausschnitt erstreckt sich in radialer Richtung von der zentral innerhalb eines Chargenraums 14 angeordneten Symmetrieachse 16 über ein seitliches, thermisches Abschirmsystem 18 bis zu einer seitlichen, äußeren Einhausung 20. Die Einhausung 20 ist z.B. aus Stahl ausgebildet. In dem Chargenraum 14 ist schematisch ein thermisch zu behandelndes Bauteil 21 dargestellt. Das thermische Abschirmsystem 18 weist ein seitliches Abschirmelement 22 auf. Dieses ist entsprechend wie das Abschirmelement 2 gemäß der ersten Ausführungsform aufgebaut (vgl. Fig. 1). Insbesondere weist das seitliche Abschirmelement 22 eine (nicht im Detail dargestellte) Einfassung aus Wolframblech(en) auf, in der eine (nicht im Detail dargestellte) Schüttung aus hochtemperaturstabilisiertem Zirkonoxid (ZrO₂) aufgenommen ist.

Das thermische Abschirmsystem 18 weist ferner mehrere (vorliegend: vier), in der Abschirmrichtung zueinander beabstandete Strahlbleche 24, die in Abschirmrichtung r_{A} benachbart zu dem seitlichen Abschirmelement 22 angeordnet sind, auf. Die Strahlbleche 24 sind auf der von dem Chargenraum 14 abgewandten Seite des seitlichen Abschirmelements 22 angeordnet. Das Abschirmelement 22 ist umlaufend um den Chargenraum 14 ausgebildet und erstreckt sich entlang der Höhenrichtung über eine vorbestimmte Höhe. Die Strahlbleche 24 sind entsprechend mit zunehmend größer werdendem Durchmesser ausgebildet. Sowohl in dem Abschirmelement 22 als auch in den Strahlblechen 24 können entsprechende zusätzliche Strukturen oder Durchgangsöffnungen vorgesehen sein, beispielsweise zur Anpassung an weitere Komponenten des Hochtemperaturofens 12 (z.B. an Heizelemente, an Anschlusskontakte für die Heizelemente, an eine Ladeöffnung, etc.). Für die Strahlbleche 24 ist dadurch, dass der Chargenraum 14 bereits durch das Abschirmelement 22 thermisch abgeschirmt wird, eine Ausbildung aus Molybdän ausreichend. Die einzelnen Strahlbleche 24 weisen jeweils eine Dicke von 0,25 mm auf. Die Gesamtdicke d_{G} des seitlichen, thermischen Abschirmsystems 18 gemessen entlang der Abschirmrichtung r_{A} beträgt ca. 43 mm, wobei die Dicke d_{E} des seitlichen Abschirmelements 22 entlang der Abschirmrichtung r_{A} ca. 19 mm beträgt.

Bei der nachfolgenden Erläuterung der vierten und fünften Ausführungsform wird vorwiegend auf die Unterschiede gegenüber der dritten Ausführungsform eingegangen. Für gleiche oder einander entsprechende Bauteile werden wiederum die gleichen Bezugszeichen verwendet (die jeweils mit einem oder zwei Strichen versehen sind).

Bei der in Fig. 4 dargestellten, vierten Ausführungsform sind die Strahlbleche 24' (vorliegend: vier) auf der dem Chargenraum 14' zugewandten Seite des seitlichen Abschirmelements 22' angeordnet. Bei den Strahlblechen 24' sind zumindest diejenigen, die direkt angrenzend an den Chargenraum 14' angeordnet sind oder die von dem Chargenraum 14' nur geringfügig beabstandet sind (beispielsweise die ersten drei) aufgrund der in diesem Bereich auftretenden, hohen Temperaturen aus Wolfram ausgebildet. Die weiter in Abschirmrichtung r_{A} nach außen folgenden Strahlbleche 24' (beispielsweise das verbleibende eine) können insbesondere auch aus Molybdän gebildet sein. Auch kann die Einfassung des seitlichen Abschirmelements 22' ggf. aus Molybdän (an Stelle von Wolfram) ausgebildet sein.

Bei der in Fig. 5 dargestellten, fünften Ausführungsform wird das seitliche, thermische Abschirmsystem 18" ausschließlich aus einem Abschirmelement 22" gebildet, d.h. es sind keine zusätzlichen Strahlbleche vorgesehen. Das Abschirmelement 22" weist entlang der Abschirmrichtung r_{A} eine entsprechend große Dicke d_{E} von 43 mm auf.

Im Hinblick auf die Abschirmwirkung und auf das Verhalten im Einsatz sind bzgl. der verschiedenen Varianten, in denen das erfindungsgemäße Abschirmsystem realisiert werden kann, die nachfolgenden Punkte zu berücksichtigen:

Ein keramischer Werkstoff auf der Basis von Zirkonoxid (ZrO₂), der in partikulärer und/oder faseriger Struktur vorliegt, weist eine vergleichsweise niedrige Wärmeleitfähigkeit auf (beispielsweise im Vergleich zu Refraktärmetallen). Gerade bei hohen Temperaturen, insbesondere bei Temperaturen ≥ 1.500 °C, noch bevorzugter bei Temperaturen ≥ 1.700 °C, ist die Abschirmwirkung des Abschirmelements derjenigen einer Folge von Strahlblechen, die eine vergleichbare Gesamtdicke aufweist, deutlich überlegen. Dies bedeutet, dass im Einsatz in einem stationären Zustand bei einer entsprechend hohen Temperatur des an das Abschirmelement angrenzenden Bereichs (z.B. des Chargenraums) über die Dicke des Abschirmelements ein vergleichsweise hoher Temperaturabfall erzielbar ist und dass der Energieverbrauch zum Halten des stationären Zustands vergleichsweise niedrig ist. Auch kann so der innerhalb des Chargenraums auftretende Temperaturgradient minimiert werden, was gerade für kritische Prozesse vorteilhaft ist. Das Abschirmelement weist jedoch im Vergleich eine höhere Wärmekapazität als eine Folge von Strahlblechen, die sich über eine vergleichbare Dicke erstreckt, auf. Dies führt zu Verzögerungen und ggf. zu einem erhöhten Energieverbrauch bei Aufheizphasen, wenn Temperaturänderungen innerhalb von kurzen Zeiten einzustellen sind.

Die Vorsehung eines oder mehrerer Abschirmelemente ohne Kombination mit Strahlblechen bietet angesichts der oberhalb diskutierten Eigenschaften insbesondere für solche Hochtemperaturöfen Vorteile, in denen über vergleichsweise lange Zeitdauern die Temperatur stationär oder im Wesentlichen stationär bei hohen Werten (z.B. ≥ 1.500 °C, insbesondere ≥ 1.700 °C) gehalten werden muss. Dies ist beispielsweise bei der Saphir-Einkristallherstellung der Fall.

Bei thermischen Prozessen mit vergleichsweise kurzer Zeitdauer, die in Folge ausgeführt werden, und/oder bei Einstellen eines mehrstufigen Temperaturprofils wird vergleichsweise häufig im thermisch transienten Regime gearbeitet. Dies ist beispielsweise auch bei Sinteröfen für Refraktärmetalle der Fall. Für solche Anwendungen ist im Hinblick auf eine Reduzierung der Wärmekapazität des thermischen Abschirmsystems vorteilhaft, wenn das Abschirmelement mit Strahlblechen kombiniert wird. Auf diese Weise kann der erforderliche Energieverbrauch für innerhalb vergleichsweise kurzer Zeit durchzuführende Temperaturanstiege gesenkt werden. Eine solche Kombination bietet aber auch für die oberhalb erläuterten Einsatzbedingungen, bei denen über vergleichsweise lange Zeitdauern die Temperatur stationär oder im Wesentlichen stationär bei hohen Werten (z.B. ≥ 1.500 °C, insbesondere ≥ 1.700 °C) gehalten werden muss, Vorteile und ist dementsprechend auch für solche Einsatzbedingungen gut geeignet.

Es ist zu berücksichtigen, dass bei vergleichsweise niedrigen Temperaturen (z.B. 500°C) und bei gleicher Dicke der Abschirmung der Wärmefluss durch Strahlung, der bei Strahlblechen dominiert, unter dem Wärmefluss durch Wärmeleitung, der bei dem Abschirmelement dominiert, liegt. Dementsprechend ist die Abschirmwirkung einer Folge von Strahlblechen bei vergleichsweise niedrigen Temperaturen (z.B. bei Temperaturen im Bereich von 500 °C) derjenigen von einem Abschirmelement vergleichbarer Dicke überlegen. Auch aus diesem Grund ist gerade eine Kombination aus Abschirmelement und Strahlblechen besonders vorteilhaft. Im Hinblick auf die oberhalb erläuterten Zusammenhänge ist vorteilhaft, wenn das Abschirmelement direkt benachbart zu dem Chargenraum angeordnet ist und die Folge von Strahlblechen auf der von dem Chargenraum abgewandten Seite des Abschirmelements angeordnet ist.

Ferner ist zu berücksichtigen, dass bei Strahlblechabschirmungen der Wärmefluss mit steigender Temperatur deutlich stärker ansteigt als dies bei einem Abschirmelement der Fall ist. Daraus ergibt sich die sehr gute Abschirmwirkung des Abschirmelements gerade bei hohen Temperaturen (z.B. ≥ 1.500 °C, insbesondere ≥ 1.700 °C). Dementsprechend ist dann, wenn eine Kombination von Abschirmelement und Strahlblechen eingesetzt wird, besonders bevorzugt, wenn das Abschirmelement angrenzend an den Bereich der hohen Temperaturen (z.B. ≥ 1.500 °C, insbesondere ≥ 1.700 °C), insbesondere angrenzend an den Chargenraum, angeordnet ist.

Die dargestellten Zusammenhänge konnten auch durch eine analytische und numerische Berechnung belegt werden.

## Patentansprüche

1. Thermisches Abschirmsystem zur thermischen Abschirmung eines Chargenraums (14; 14'; 14") von Hochtemperaturöfen (12; 12'; 12"), aufweisend mindestens ein Abschirmelement (2; 2'; 22; 22'; 22"),
**dadurch gekennzeichnet,**
**dass** das Abschirmelement (2; 2'; 22; 22'; 22") eine Einfassung (4; 4') aus Refraktärmetallblech(en) (5; 5') und einen in partikulärer und/oder faseriger Struktur vorliegenden, keramischen Werkstoff (8; 10') auf der Basis von Zirkonoxid (ZrO₂), der in der Einfassung (4; 4') aufgenommen ist, aufweist.

2. Thermisches Abschirmsystem gemäß Anspruch 1, **dadurch gekennzeichnet, dass** der keramische Werkstoff als Schüttung (8) von Einzelpartikeln vorliegt.

3. Thermisches Abschirmsystem gemäß Anspruch 2, **dadurch gekennzeichnet, dass** die Schüttung (8) von Einzelpartikeln eine monomodale Kornverteilung aufweist.

4. Thermisches Abschirmsystem gemäß einem der vorangehenden Ansprüche, **dadurch gekennzeichnet, dass** der keramische Werkstoff (8; 10') zu einem Anteil von ≥ 80 Gew.% aus Zirkonoxid (ZrO₂) besteht.

5. Thermisches Abschirmsystem gemäß einem der vorangehenden Ansprüche, **dadurch gekennzeichnet, dass** das/die Refraktärmetallblech(e) (5; 5') zu ≥ 98 Gew.% aus Wolfram gebildet ist/sind.

6. Thermisches Abschirmsystem gemäß einem der vorangehenden Ansprüche, **dadurch gekennzeichnet, dass** das/die Refraktärmetallblech(e) (5; 5') eine Wandstärke d_{B} mit 0,25 mm ≤ d_{B} ≤ 2,5 mm aufweist/aufweisen.

7. Thermisches Abschirmsystem gemäß einem der vorangehenden Ansprüche, **dadurch gekennzeichnet, dass** das
Abschirmelement (2; 2'; 22; 22'; 22") eine Dicke d_{E} im Bereich von 8 mm ≤ d_{E} ≤ 120 mm aufweist.

8. Thermisches Abschirmsystem gemäß einem der vorangehenden Ansprüche, **dadurch gekennzeichnet, dass** dieses neben dem Abschirmelement (22; 22') mehrere, zueinander beabstandete Strahlbleche (24; 24') aus Refraktärmetall aufweist.

9. Thermisches Abschirmsystem gemäß Anspruch 8, **dadurch gekennzeichnet, dass** die Strahlbleche (24; 24') aus Molybdän, aus einer Molybdän-basierten Legierung, aus Wolfram oder aus einer Wolfram-basierten Legierung sind.

10. Hochtemperaturofen, aufweisend einen Chargenraum (14; 14'; 14") zur thermischen Behandlung von Teilen, **gekennzeichnet durch** ein thermisches Abschirmsystem (18; 18'; 18") gemäß einem der vorangehenden Ansprüche, welches den Chargenraum (14; 14'; 14") zumindest teilweise umgibt.

11. Hochtemperaturofen gemäß Anspruch 10, **dadurch gekennzeichnet, dass** das thermische Abschirmsystem (18; 18'; 18") mehrere, in einer Abschirmrichtung (r_{A}) zueinander beabstandete Strahlbleche (24; 24') aus Refraktärmetall, die in Abschirmrichtung (r_{A}) benachbart zu dem Abschirmelement (22; 22') angeordnet sind, aufweist.

12. Hochtemperaturofen gemäß Anspruch 11, **dadurch gekennzeichnet, dass** die Strahlbleche (24) auf der von dem Chargenraum (14) abgewandten Seite des Abschirmelements (22) angeordnet sind.

13. Hochtemperaturofen gemäß Anspruch 11 oder 12, **dadurch gekennzeichnet, dass** die Anzahl a der in Abschirmrichtung (r_{A}) benachbart zu dem Abschirmelement (22; 22') angeordneten Strahlbleche (24; 24") im Bereich von 1 ≤ a ≤ 7 liegt.

14. Hochtemperaturofen gemäß einem der Ansprüche 10 bis 13, **gekennzeichnet durch** mindestens ein elektrisches Heizelement zur Beheizung des Chargenraums (14; 14'; 14"), das innerhalb des thermischen Abschirmsystems (18; 18'; 18") angeordnet ist.

15. Hochtemperaturofen gemäß einem der Ansprüche 10 bis 14, **dadurch gekennzeichnet, dass** mindestens ein Abschirmelement (2; 2'; 22; 22'; 22") als modular aus dem Hochtemperaturofen (12; 12'; 12") herausnehmbares Bauteil ausgebildet ist.

## Claims

1. A thermal shielding system for thermally shielding a batch space (14; 14'; 14") of high-temperature furnaces (12; 12'; 12"),
comprising at least one shielding element (2; 2'; 22; 22'; 22"),
**characterized**
**in that** the shielding element (2; 2'; 22; 22'; 22") has a surround (4; 4') made up of refractory metal sheet(s) (5; 5') and a ceramic material (8; 10'), present in a particulate and/or fibrous structure, based on zirconium oxide (ZrO₂), which is accommodated in the surround (4; 4').

2. The thermal shielding system as claimed in claim 1, **characterized in that** the ceramic material is present as a bed (8) of individual particles.

3. The thermal shielding system as claimed in claim 2, **characterized in that** the bed (8) of individual particles has a monomodal grain distribution.

4. The thermal shielding system as claimed in one of the preceding claims, **characterized in that** the ceramic material (8; 10') consists to an extent of ≥ 80% by weight of zirconium oxide (ZrO₂).

5. The thermal shielding system as claimed in one of the preceding claims, **characterized in that** the refractory metal sheet(s) (5; 5') is/are formed to an extent of ≥ 98% by weight from tungsten.

6. The thermal shielding system as claimed in one of the preceding claims, **characterized in that** the refractory metal sheet(s) (5; 5') has/have a wall thickness d_{B} where 0.25 mm ≤ d_{B} ≤ 2.5 mm.

7. The thermal shielding system as claimed in one of the preceding claims, **characterized in that** the shielding element (2; 2'; 22; 22'; 22") has a thickness d_{E} in the range of 8 mm ≤ d_{E} ≤ 120 mm.

8. The thermal shielding system as claimed in one of the preceding claims, **characterized in that**, in addition to the shielding element (22; 22'), it comprises a plurality of spaced-apart radiant plates (24; 24') made of refractory metal.

9. The thermal shielding system as claimed in claim 8, **characterized in that** the radiant plates (24; 24') are made of molybdenum, of a molybdenum-based alloy, of tungsten or of a tungsten-based alloy.

10. A high-temperature furnace, comprising a batch space (14; 14'; 14") for the thermal treatment of parts, **characterized by** a thermal shielding system (18; 18'; 18") as claimed in one of the preceding claims, which at least partially surrounds the batch space (14; 14'; 14").

11. The high-temperature furnace as claimed in claim 10, **characterized in that** the thermal shielding system (18; 18'; 18") comprises a plurality of radiant plates (24; 24') made of refractory metal, which are spaced apart in a shielding direction (r_{A}) and are arranged adjacent to the shielding element (22; 22') in the shielding direction (r_{A}).

12. The high-temperature furnace as claimed in claim 11, **characterized in that** the radiant plates (24) are arranged on that side of the shielding element (22) which is remote from the batch space (14).

13. The high-temperature furnace as claimed in claim 11 or 12, **characterized in that** the number a of radiant plates (24; 24") arranged adjacent to the shielding element (22; 22') in the shielding direction (r_{A}) lies in the range of 1 ≤ a ≤ 7.

14. The high-temperature furnace as claimed in one of claims 10 to 13, **characterized by** at least one electrical heating element for heating the batch space (14; 14'; 14"), said electrical heating element being arranged inside the thermal shielding system (18; 18'; 18").

15. The high-temperature furnace as claimed in one of claims 10 to 14, **characterized in that** at least one shielding element (2; 2'; 22; 22'; 22") is in the form of a component which is removable from the high-temperature furnace (12; 12'; 12") in modular form.

## Revendications

1. Dispositif de protection thermique d'une chambre de charge (14 ; 14' ; 14") de four à haute température (12 ; 12' ; 12") incluant au moins un élément de protection (2 ; 2' ; 22 ; 22' ; 22"), **caractérisé en ce que** ledit élément de protection (2 ; 2' ; 22 ; 22' ; 22") comprend un encadrement (4 ; 4') réalisé en une ou plusieurs tôles de métal réfractaire (5 ; 5') ainsi qu'un matériau céramique (8 ; 10') à base d'oxyde de zirconium (ZrO₂) qui présente une structure particulaire et/ou fibreuse et qui est incorporé dans l'encadrement (4 ; 4').

2. Dispositif de protection thermique selon la revendication 1, **caractérisé en ce que** le matériau céramique est présent sous la forme de particules individuelles en vrac (8).

3. Dispositif de protection thermique selon la revendication 2, **caractérisé en ce que** les particules individuelles en vrac (8) présentent une distribution granulométrique monomodale.

4. Dispositif de protection thermique selon l'une quelconque des revendications précédentes, **caractérisé en ce que** le matériau céramique (8 ; 10') est composé d'oxyde de zirconium (ZrO₂) dans une proportion supérieure ou égale à 80 % en poids.

5. Dispositif de protection thermique selon l'une quelconque des revendications précédentes, **caractérisé en ce que** la ou les tôles de métal réfractaire (5 ; 5') sont réalisées en tungstène dans une proportion supérieure ou égale à 98 % en poids.

6. Dispositif de protection thermique selon l'une quelconque des revendications précédentes, **caractérisé en ce que** la ou les tôles de métal réfractaire (5 ; 5') présentent und épaisseur de paroi (d_{B}) comprise entre 0,25 mm et 2,5 mm.

7. Dispositif de protection thermique selon l'une quelconque des revendications précédentes, **caractérisé en ce que** l'élément de protection (2 ; 2' ; 22 ; 22' ; 22") présente une épaisseur (d_{E}) comprise entre 8 mm et 120 mm.

8. Dispositif de protection thermique selon l'une quelconque des revendications précédentes, **caractérisé en ce que** ledit dispositif comprend, outre l'élément de protection (22 ; 22'), une pluralité de tôles de rayonnement (24 ; 24') en métal réfractaire espacées les unes des autres.

9. Dispositif de protection thermique selon la revendication 8, **caractérisé en ce que** les tôles de rayonnement (24 ; 24') sont réalisées en molybdène, en un alliage à base de molybdène, en tungstène ou bien en un alliage à base de tungstène.

10. Four à haute température comprenant une chambre de charge (14 ; 14' ; 14") destinée au traitement thermique de pièces, **caractérisé par** la présence d'un dispositif de protection thermique (18 ; 18' ; 18") qui est conforme à l'une quelconque des revendications précédentes et qui entoure ladite chambre de charge (14 ; 14' ; 14") au moins pour partie.

11. Four à haute température selon la revendication 10, **caractérisé en ce que** le dispositif de protection thermique (18 ; 18' ; 18") comprend une pluralité de tôles de rayonnement (24 ; 24') en métal réfractaire qui sont espacées les unes des autres dans une direction de protection (r_{A}) et disposées adjacentes, dans la direction de protection (r_{A}), à l'élément de protection (22' ; 22").

12. Four à haute température selon la revendication 11, **caractérisé en ce que** les tôles de rayonnement (24) sont agencées sur le côté de l'élément de protection (22) qui est opposé à la chambre de charge (14).

13. Four à haute température selon la revendication 11 ou 12, **caractérisé en ce que** le nombre (a) des tôles de rayonnement (24 ; 24") disposées adjacentes à l'élément de protection (22 ; 22'), dans la direction de protection (r_{A}), est compris entre 1 et 7.

14. Four à haute température selon l'une quelconque des revendications 10 à 13, **caractérisé par** la présence d'au moins un élément chauffant électrique agencée à l'intérieur du dispositif de protection thermique (18 ; 18' ; 18") et destinée à chauffer la chambre de charge (14 ; 14' ; 14").

15. Four à haute température selon l'une quelconque des revendications 10 à 14, **caractérisé en ce qu'** au moins un élément de protection (2 ; 2' ; 22 ; 22' ; 22") est réalisé en tant que module amovible du four à haute température (12 ; 12' ; 12").
